# EUROPÄISCHE PATENTSCHRIFT

(11) **EP 2 415 150 B1**
(45) Veröffentlichungstag und Bekanntmachung des Hinweises auf die Patenterteilung: **19.06.2013**
(21) Anmeldenummer: 10711342.5
(22) Anmeldetag: 23.03.2010
(51) Int. Cl.: H02P 1/50, H02P 25/02, H02P 21/00

(54) **VERFAHREN ZUM BETREIBEN EINER ELEKTROMASCHINE UND VORRICHTUNG ZUR DURCHFÜHRUNG DES VERFAHRENS**
METHOD FOR OPERATING AN ELECTRICAL MACHINE AND DEVICE FOR CARRYING OUT SAID METHOD
PROCÉDÉ POUR FAIRE FONCTIONNER UNE MACHINE ÉLECTRIQUE ET DISPOSITIF DESTINÉ À LA RÉALISATION DU PROCÉDÉ

(30) Priorität: 31.03.2009 DE 102009015105
(43) Veröffentlichungstag der Anmeldung: 08.02.2012
(73) Patentinhaber: SEW-EURODRIVE GmbH & Co. KG, 76646 Bruchsal (DE)
(72) Erfinder: HARTMANN, Matthias, 76646 Bruchsal (DE); LEWANDOWSKI, Marek, 71272 Renningen (DE); HAUCK, Matthias, 68723 Schwetzingen (DE)
(86) Internationale Anmeldenummer: PCT/EP2010/001800
(87) Internationale Veröffentlichungsnummer: WO 2010/112153

(56) Entgegenhaltungen:
- WO-A1-2008/096523
- DE-A1- 3 026 348
- DE-A1- 3 120 797
- JP-A- 2 032 784
- US-A- 4 982 123
- US-A1- 2009 001 924
- US-A1- 2009 072 778

## Beschreibung

Die Erfindung betrifft ein Verfahren zum Betrieben einer Elektromaschine und eine Vorrichtung zur Durchführung des Verfahrens.

Es ist bekannt, Synchronmaschinen mittels eines Umrichters, der einen gleichspannungsgespeisten Wechselrichter umfasst, zu versorgen. Hierbei wird oftmals ein Winkelsensor mit dem Rotor der Elektromaschine verbunden, um bei der Regelung der Elektromaschine die Winkelinformation zu berücksichtigen.

Aus der WO 20081096523 A1 ist ein Regelverfahren zur Regelung eines Elektromotors bekannt, dessen Rotor mit einem Winkelsensor verbunden ist, so dass die detektierte Winkelinformation vom Regelverfahren berücksichtigt wird.

Aus der DE 3120797 A1 ist ebenfalls ein Regelverfahren für eine Schenkelpolmaschine. bekannt, wobei die Winkelstellung des Rotors erfasst und berücksichtigt wird.

Der Erfindung liegt daher die Aufgabe zugrunde, eine geberlose Regelung bei der Synchronmaschine weiterzubilden, wobei auch im unteren Drehzahlbereich ein geregelter Betrieb ausführbar sein soll.

Erfindungsgemäß wird die Aufgabe bei dem Verfahren nach den in Anspruch 1 und bei der Vorrichtung nach den in Anspruch 4 angegebenen Merkmalen gelöst.

Wichtige Merkmale der Erfindung bei dem Verfahren sind, dass es zum Betrieben einer Elektromaschine, insbesondere einer fremderregten Synchronmaschine mit zusätzlichem Kurzschlusskäfig, vorgesehen ist, wobei die Elektromaschine einen relativ zu einer Statorwicklung bewegbaren Rotor, insbesondere drehbar gelagerten, Rotor umfasst, insbesondere wobei der Rotor eine Erregerwicklung und/oder einen Kurzschlusskäfig aufweist,
wobei von einer die Elektromaschine speisenden Einheit, insbesondere umfassend einen von einer elektronischen Schaltung angesteuerten Wechselrichter, ein Statorspannungsraumzeiger gestellt und ein Statorstromraumzeiger bestimmt wird,
wobei unterhalb eines kritischen Drehzahlwertes des Rotors der bestimmte Statorstromraumzeiger auf einen Söllwert hin geregelt wird,
insbesondere also der bestimmte Betrag des Statorstromraumzeigers auf einen Sollwert für Betrag hin geregelt wird und die Richtung und/oder Drehzahl des Statorstromraumzeigers auf einen entsprechenden Sollwert für Richtung und/oder Drehzahl.

Von Vorteil ist dabei, dass im unteren Drehzahlbereich ein geregelter Betrieb ermöglicht ist, insbesondere ohne dass eine Information über die Winkellage des Rotors vorliegt. Dabei wirkt bei Abweichung des Rotors von der gewünschten Winkellage der Kurzschlusskäfig dämpfen. Denn bei Auftreten von Schlupf erhöht sich mit dem Schlupf auch der ohmsche Verlust im Kurzschlusskäfig. Somit ist also sogar bei erfindungsgemäßer Drehzahlsteuerung eine geringe Abweichung vom Sollwert erreichbar. Außerdem ist eine hohe Dynamik eines von der Regeleinheit der elektronischen Schaltung umfassten Drehzahlregelkreises in Folge des ständig mit durchgeführten Flussberechnungsmodells, also Flussmodells, erreichbar.

Weiter von Vorteil ist das bedämpfte Verhalten bei allen Betriebspunkten. Somit ist die Schwingneigung reduzierbar. Außerdem ist bei Ausfall der Energieversorgung, insbesondere bei Ausfall der Bestromung oder anderweitig verursachten Nicht-Bestromung, der Erregerfeldwicklung ein Notbetrieb dadurch ermöglicht, dass die Elektromaschine als Asynchronmaschine mittels des Kurzschlusskäfigs betreibbar ist.
Die Statorwicklung der Elektromaschine ist vorzugsweise als mehrphasige Drehstromwicklung ausgeführt, insbesondere als dreiphasige Drehstromwicklung, und wird von einem Wechselrichter gespeist, der aus einer unipolaren Spannung gespeist wird. Diese wird beispielsweise durch eine Batteriespannung oder eine gleichgerichtete Netzspannung erzeugt. Die Ansteuersignale für die Schalter des Wechselrichters werden von einer Signalelektronik erzeugt, die eine Regelungseinheit umfassen, der Strommesswerte zur Bestimmung des Statorstromraumzeigers zugeführt werden. Dabei stellt die Regelungseinheit den Statorspannungsraumzeiger so, dass der Statorstromraumzeiger auf einen Sollwert hin geregelt wird.

Die Statorwicklung der Elektromaschine ist vorzugsweise als mehrphasige Drehstromwicklung ausgeführt, insbesondere als dreiphasige Drehstromwicklung, und wird von einem Wechselrichter gespeist, der aus einer unipolaren Spannung gespeist wird. Diese wird beispielsweise durch eine Batteriespannung oder eine gleichgerichtete Netzspannung erzeugt. Die Ansteuersignale für die Schalter des Wechselrichters werden von einer Signalelektronik erzeugt, die eine Regelungseinheit umfassen, der Strommesswerte zur Bestimmung des Statorstromraumzeigers zugeführt werden. Dabei stellt die Regelungseinheit den Statorspannungsraumzeiger so, dass der Statorstromraumzeiger auf einen Sollwert hin geregelt wird.

Bei einer vorteilhaften Ausgestaltung wird stets, also auch unterhalb und oberhalb der kritischen Drehzahl, ein Flussraumzeiger gemäß einem Flussmodell bestimmt, insbesondere wobei dem Flussmodell der Statorspannungsraumzeiger zugeführt wird und ein zeitliches Integral gebildet wird. Von Vorteil ist dabei, dass das Flussmodell stets einen Wert für den Flussraumzeiger zur Verfügung stellt und die vom Integrierer verursachte Drift des Flusses durch Stützung des Flussmodells durch den Statorstromraumzeiger verringerbar ist.

Bei einer vorteilhaften Ausgestaltung wird unterhalb der kritischen Drehzahl das Flussmodell in Richtung des Statorstromraumzeigers gestützt, insbesondere die Richtung des Statorstromraumzeigers als Richtung des Flusses verwendet wird. Von Vorteil ist dabei, dass der auf diese Weise aus dem Flussmodell erhaltene Flussraumzeiger nur geringe Abweichungen zum physikalisch realen Flussraumzeiger hat.

Bei einer vorteilhaften Ausgestaltung ist die kritische Drehzahl derart gewählt, dass ein oberhalb der kritischen Drehzahl aus einem Flussmodell bestimmter Flussraumzeiger mit einem besseren Signal-Rauschverhältnis bestimmbar ist als ein unterhalb der kritischen Drehzahl aus dem Flussmodell bestimmter Flussraumzeiger, insbesondere wobei das Signal-Rausch-Verhältnis oberhalb der kritischen Drehzahl größer als Zwei ist. Von Vorteil ist dabei, dass ein fehlerarmes Signal für die Regelungseinheit zur Verfügung stellbar ist.

Bei einer vorteilhaften Ausgestaltung wird bei Überschreiten der kritischen Drehzahl das Regelverfahren auf ein feldorientiertes Regelverfahren umgeschaltet, insbesondere also aus dem Flussmodell ein Flussraumzeiger bestimmt wird und die Raumzeiger der physikalischen Größen, wie Statorstrom, in einem hierzu orientierten Koordinatensystem dargestellt werden. Von Vorteil ist dabei, dass eine hohe Regelgüte und möglichst geringe Abweichungen zwischen Sollwert und Istwert erreichbar ist.

Wichtige Merkmale bei der Vorrichtung sind, dass mit ihr die vorgenannten Verfahren durchführbar sind, wobei am Rotor der Synchronmaschine eine Erregerfeldwicklung und/oder ein Kurzschlusskäfig angeordnet sind.

Von Vorteil ist dabei, dass ein bedämpftes Verhalten erzielbar ist, insbesondere bei niedrigen Drehzahlen. Außerdem ist bei niedrigen Drehzahlen, also unterhalb der kritischen Drehzahl eine einfache Regelung ermöglicht, wobei zwar keine Information über die Winkellage des Rotors zur Verfügung steht, aber Winkelabweichungen des Rotors von der gewünschten Winkellage bedämpft werden mittels des Kurzschlusskäfigs.

Bei einer vorteilhaften Ausgestaltung sind Mittel zur Erfassung des Motorstroms mit einer elektronischen Schaltung verbunden, die Ansteuersignale für Schalter eines Wechselrichters erzeugt, aus dem die Elektromaschine gespeist wird. Von Vorteil ist dabei, dass eine einfache und kostengünstige Realisierung der Erfindung ermöglicht ist.

Bei einer vorteilhaften Ausgestaltung erfolgt die Energieversorgung der Erregerfeldwicklung aus einem Gleichrichter, der von einer ebenfalls am Rotor vorgesehenen Sekundärwicklung versorgt ist, die an eine stationär angeordnete Primärwicklung induktiv gekoppelt vorgesehen ist, insbesondere zur berührungslosen Energieversorgung der Erregerfeldwicklung. Von Vorteil ist dabei, dass ein Schleifkontakt vermeidbar ist und somit ein Reibmoment entfällt. Eine höhere Schwingneigung, insbesondere bei Drehzahlsollwertsprüngen, wird mittels des Kurzschlusskäfigs bedämpfbar - zumindest bei niedrigen Drehzahlen.

Weitere Vorteile ergeben sich aus den Unteransprüchen.

Die Erfindung wird nun näher erläutert:

Erfingdungsgemäß weist die Elektromaschine an ihrem Rotor einen Kurzschlusskäfig und auch eine Erregerfeldwicklung auf. Somit ist die Elektromaschine bei Bestromung der Erregerfeldwicklung mit Gleichstrom als fremderregte Synchronmaschine betreibbar. Bei Nicht-Bestromung ist die Elektromaschine als Asynchronmotor betreibbar. In beiden Fällen wird die Statorwicklung der Elektromaschine derart gespeist, dass ein Drehfeld erzeugt wird, das mit dem Rotor wechselwirkt.

Bei dem erfindungsgemäßen Regelverfahren wird die Statorwicklung der Elektromaschine von einem Wechselrichter gespeist, dessen elektronische Schalter pulsweitenmodulierte Ansteuersignale von einer elektronischen Schaltung bekommen, die eine Regelungseinheit umfasst.

Außerdem sind Mittel zur Erfassung des Motorstroms von der elektronischen Schaltung umfasst. Die Regelungseinheit stellt mittels der Schalter des Wechselrichters die Motorspannung derart, dass der Motorstrom in Richtung auf seinen Sollwert hin geregelt wird.

Dabei führt die Regelungseinheit ein Regelverfahren durch, wobei unterhalb eines kritischen Drehzahlwertes des Rotors die Motorspannung derart gestellt wird, dass der Betrag des Statorstromraumzeigers auf einen gewünschten Betrag hin geregelt wird und die Richtung beziehungsweise Drehzahl des Statorstromraumzeigers dem jeweils gewünschten Wert, also Sollwert, entspricht. Wenn der Rotor eine abweichende Richtung oder Drehzahl aufweist, entsteht ein Schlupf, welchem der Kurzschlusskäfig abdämpfend entgegen wirkt.

Zusätzlich wird auch schon unterhalb des kritischen Drehzahlwertes des Rotors der Wert des Flusses bestimmt gemäß einem Flussmodell, das in Stromzeigerrichtung gestützt ist. Dieser somit bestimmte Flusswert wird jedoch nicht weiter verwendet, da zu niedrigen Drehzahlwerten hin das Signal-Rausch-Verhältnis sich immer weiter verschlechtert.

Oberhalb des kritischen Drehzahlwertes wird gemäß dem Flussmodell die Flussrichtung bestimmt, wobei der kritische Drehzahlwert derart gewählt ist, dass das Signal-Rausch-Verhältnis hierbei ausreichend gut ist. Die so bestimmte Richtung wird als Grundlage eines Koordinatensystems verwendet, in welchem die Raumzeiger physikalischer Größen, wie beispielsweise Strom, dargestellt werden und somit wird ein feldorientierten Regelverfahren ausführbar.

Beim Übersteigen der kritischen Drehzahl vom unteren Bereich aus wird der aktuelle im Flussmodell bestimmte Flussraumzeiger verwendet für die dann startende feldorientierte Regelung.

Die Erfindung umfasst auch Ausführungsbeispiele, bei denen Rotor und Stator vertauscht vorgesehen sind, also am Stator die Erregerwicklung und der Kurzschlusskäfig vorgesehen ist und am Rotor die Drehstromwicklung, welche berührungslos versorgbar ist.

## Patentansprüche

1. Verfahren zum Betrieben einer **aeberlosen** Elektromaschine, die als fremderregte Synchronmaschine mit zusätzlichem Kurzschlusskäfig ausgeführt ist,
wobei die Elektromaschine einen relativ zu einer Statorwicklung bewegbaren Rotor, also drehbar gelagerten, Rotor umfasst,
wobei der Rotor eine Erregerwicklung und einen Kurzschlusskäfig aufweist,
wobei von einer die Elektromaschine speisenden Einheit, die einen von einer elektronischen Schaltung angesteuerten Wechselrichter umfasst, ein Statorspannungsraumzeiger gestellt und ein Statorstromraumzeiger bestimmt wird,
**dadurch gekennzeichnet, dass**
unterhalb eines kritischen Drehzahlwertes des Rotors der bestimmte Statorstromraumzeiger auf einen Sollwert hin geregelt wird,
also der bestimmte Betrag des Statorstromraumzeigers auf einen Sollwert für Betrag hin geregelt wird und die Richtung und Drehzahl des Statorstromraumzeigers auf einen entsprechenden Sollwert für Richtung und einen entsprechenden Sollwert für Drehzahl,
wobei stets, also auch unterhalb und oberhalb der kritischen Drehzahl, ein Flussraumzeiger gemäß einem Flussmodell bestimmt wird, wobei dem Flussmodell der Statorspannungsraumzeiger und der Statorstromraumzeiger zugeführt wird und ein zeitliches Integral gebildet wird,
wobei unterhalb der kritischen Drehzahl das Flussmodell in Richtung des Statorstromraumzeigers gestützt wird, also die Richtung des Statorstromraumzeigers als Richtung des Flusses verwendet wird,
wobei bei Überschreiten der kritischen Drehzahl das Regelverfahren auf ein feldorientiertes Regelverfahren umgeschaltet wird, also aus dem Flussmodell ein Flussraumzeiger bestimmt wird und die Raumzeiger der physikalischen Größen, wie Statorstrom, in einem hierzu, also zum Flussraumzeiger, orientierten Koordinatensystem dargestellt werden,
wobei die Energieversorgung der Erregerfeldwicklung aus einem Gleichrichter erfolgt, der von einer ebenfalls am Rotor vorgesehenen Sekundärwicklung versorgt wird, die an eine stationär angeordnete Primärwicklung induktiv gekoppelt vorgesehen wird zur berührungslosen Energieversorgung der Erregerfeldwicklung.

2. Verfahren nach mindestens einem der vorangegangenen Ansprüche,
**dadurch gekennzeichnet, dass**
die kritische Drehzahl derart gewählt ist, dass ein oberhalb der kritischen Drehzahl aus einem Flussmodell bestimmter Flussraumzeiger mit einem besseren Signal-Rauschverhältnis bestimmbar ist als ein unterhalb der kritischen Drehzahl aus dem Flussmodell bestimmter Flussraumzeiger.

3. Verfahren nach Anspruch 2,
**dadurch gekennzeichnet, dass**
das Signal-Rausch-Verhältnis oberhalb der kritischen Drehzahl größer als Zwei ist.

4. Vorrichtung zur Durchführung des Verfahrens nach mindestens einem der vorangegangenen Ansprüche,
**dadurch gekennzeichnet, dass**
am Rotor der **geberlosen** Synchronmaschine eine Erregerfeldwicklung und ein Kurzschlusskäfig angeordnet sind,
wobei Mittel zur Erfassung des Motorstroms mit einer elektronischen Schaltung verbunden sind, die Ansteuersignale für Schalter eines Wechselrichters erzeugt, aus dem die Elektromaschine gespeist wird,
wobei die Energieversorgung der **Erregerfeldwicklung** aus einem Gleichrichter erfolgt, der von einer ebenfalls am Rotor vorgesehenen Sekundärwicklung versorgt ist, die an eine stationär angeordnete Primärwicklung induktiv gekoppelt vorgesehen ist zur berührungslosen Energieversorgung der Erregerfeldwicklung.

## Claims

1. Method for operating a sensorless electrical machine which is formed as a separately excited synchronous machine having an additional squirrel cage,
wherein the electrical machine comprises a rotor which is movable relative to a stator winding, i.e. a rotatably mounted rotor,
wherein the rotor has an exciter winding and a squirrel cage,
wherein a unit feeding the electrical machine, which comprises an inverter driven by an electronic circuit, adjusts a stator voltage space vector and determines a stator current space vector,
**characterised in that**
the determined stator current space vector is regulated towards a setpoint value when the rotor is below a critical speed value,
i.e. the determined magnitude of the stator current space vector is regulated towards a setpoint value for magnitude and the direction and speed of the stator current space vector is regulated to a corresponding setpoint value for direction and a corresponding setpoint value for speed,
wherein a flux space vector is continually determined, i.e. also below and above the critical speed, in accordance with a flux model, wherein the flux model is supplied with the stator voltage space vector and the stator current space vector and a time integral is obtained,
wherein the flux model is supported below the critical speed in the direction of the stator current space vector, i.e. the direction of the stator current space vector is used as the direction of the flux,
wherein when the critical speed is exceeded, the regulating method is switched to a field-oriented regulating method, i.e. a flux space vector is determined from the flux model, and the space vectors of the physical quantities, such as stator current, are represented in a coordinate system orientated thereto, i.e. to the flux space vector,
wherein the energy supply of the exciter field winding is effected from a rectifier which is supplied by a secondary winding likewise provided on the rotor, which secondary winding is provided in an inductively coupled manner on a stationarily arranged primary winding, for the contactless energy supply of the exciter field winding.

2. Method according to at least one of the preceding claims,
**characterised in that**
the critical speed is chosen such that a flux space vector determined from a flux model above the critical speed is determinable with a better signal-to-noise ratio than a flux space vector determined from the flux model below the critical speed.

3. Method according to Claim 2,
**characterised in that**
the signal-to-noise ratio above the critical speed is greater than two.

4. Device for carrying out the method according to at least one of the preceding claims,
**characterised in that**
an exciter field winding and a squirrel cage are arranged on the rotor of the sensorless synchronous machine,
wherein means for detecting the motor current are connected to an electronic circuit which generates drive signals for switches of an inverter, from which the electrical machine is fed,
wherein the energy supply of the exciter field winding is effected from a rectifier which is supplied by a secondary winding likewise provided on the rotor, which secondary winding is provided in an inductively coupled manner on a stationarily arranged primary winding, for the contactless energy supply of the exciter field winding.

## Revendications

1. Procédé pour faire fonctionner une machine électrique sans transmetteur, qui est réalisée sous forme de machine synchrone à excitation indépendante avec une cage en court-circuit supplémentaire,
sachant que la machine électrique comprend un rotor mobile relativement à un enroulement statorique, donc un rotor monté à rotation,
sachant que le rotor présente un enroulement d'excitation et une cage en court-circuit, sachant qu'une unité alimentant la machine électrique, qui comprend un convertisseur asservi par un montage électronique, règle un vecteur spatial de tension de stator et détermine un vecteur spatial de courant de stator,
**caractérisé en ce que**
en-dessous d'une valeur critique de régime du rotor, le vecteur spatial de courant de stator déterminé est régulé sur une valeur de consigne,
donc le montant déterminé du vecteur spatial de courant de stator est régulé sur une valeur de consigne concernant le montant, et l'orientation et le régime du vecteur spatial de courant de stator sont régulés sur une valeur de consigne correspondante concernant l'orientation et une valeur de consigne correspondante concernant le régime,
sachant qu'en permanence, donc tant en dessous qu'au-dessus du régime critique, un vecteur spatial de flux est déterminé d'après un modèle de flux, sachant qu'on apporte au modèle de flux le vecteur spatial de tension de stator et le vecteur spatial de courant de stator et qu'on forme une intégrale dans le temps,
sachant qu'en dessous du régime critique, le modèle de flux est assisté en direction du vecteur spatial de courant de stator, donc la direction du vecteur spatial de courant de stator est utilisée comme direction du flux,
sachant qu'en cas de dépassement du régime critique, la méthode de régulation passe à une méthode de régulation orientée champ, donc on détermine un vecteur spatial de flux à partir du modèle de flux et on représente les vecteurs spatiaux des grandeurs physiques, comme le courant de stator, dans un système de coordonnées orienté en conséquence, donc vers le vecteur spatial de flux,
sachant que l'alimentation électrique de l'enroulement de champ d'excitation s'effectue à partir d'un redresseur alimenté par un enroulement secondaire, qui est lui aussi prévu sur le rotor et qui, en étant couplé inductivement à un enroulement primaire disposé stationnairement, est prévu pour l'alimentation électrique sans contact de l'enroulement de champ d'excitation.

2. Procédé selon la revendication précédente, **caractérisé en ce que** le régime critique est choisi de telle sorte qu'un vecteur spatial déterminé au-dessus du régime critique à partir d'un modèle de flux peut être déterminé avec un meilleur rapport signal-bruit qu'un vecteur spatial déterminé en dessous du régime critique à partir du modèle de flux.

3. Procédé selon la revendication 2, **caractérisé en ce que** le rapport signal-bruit au-dessus du régime critique est supérieur à 2.

4. Dispositif pour la mise en oeuvre du procédé selon au moins une des revendications précédentes, **caractérisé en ce qu'**un enroulement de champ d'excitation et une cage en court-circuit sont disposés sur le rotor de la machine synchrone sans transmetteur,
sachant que des moyens d'acquisition du courant du moteur sont reliés à un montage électronique qui produit des signaux d'asservissement pour des commutateurs d'un convertisseur à partir duquel est alimentée la machine électrique,
sachant que l'alimentation électrique de l'enroulement de champ d'excitation s'effectue à partir d'un redresseur alimenté par un enroulement secondaire, qui est lui aussi prévu sur le rotor et qui, en étant couplé inductivement à un enroulement primaire disposé stationnairement, est prévu pour l'alimentation électrique sans contact de l'enroulement de champ d'excitation.
